**Europäisches Patentamt**

**European Patent Office**

**Office européen des brevets**

(11) Veröffentlichungsnummer: **0 093 919**
**A1**

# (12) EUROPÄISCHE PATENTANMELDUNG

(21) Anmeldenummer: **83103950.8**

(22) Anmeldetag: **22.04.83**

(51) Int. Cl.³: **C 08 J 9/30, C 08 L 61/24**

(30) Priorität: **06.05.82 DE 3216897**

(43) Veröffentlichungstag der Anmeldung: **16.11.83**
**Patentblatt 83/46**

(84) Benannte Vertragsstaaten: **AT BE CH FR GB IT LI NL SE**

(71) Anmelder: **Schaum-Chemie W. Bauer GmbH & Co. KG, Kallenbergstrasse 21, D-4300 Essen 1 (DE)**

(72) Erfinder: **Baumann, Heinz, Römerstrasse 15, D-6711 Kleinniedesheim (DE)**
Erfinder: **Baumann, Rembert, Käfertalerstrasse 65, D-6800 Mannheim (DE)**

(74) Vertreter: **Beil, Walter, Dr. et al, BEIL, WOLFF & BEIL Rechtsanwälte Adelonstrasse 58, D-6230 Frankfurt am Main 80 (DE)**

(54) Verfahren zur Herstellung eines formaldehydarmen Harnstoff-Formaldehyd-Kombinations-Schaumes.

(57) Zur Erzielung eines formaldehydarmen, jedoch dimensionsstabilen UF-Schaums werden bis zu 96% Harnstoff in einem etwa 10 bis 30%igen wäßrigen Extrakt einer Alkyl-, Aryl- oder Alkarylsulfonsäure gelöst, diese Lösung mit einer üblichen Härter-Schaummittellösung, die das Na-Salz einer Alkyl-, Aryl- oder Alkarylsulfonsäure in einer zum Verschäumen üblichen wäßrigen Verdünnung enthält, im Verhältnis Sulfonsäurelösung zu Na-Sulfonatlösung von 1:1 bis 1:4 vermischt, der pH-Wert auf 0 bis 3 einstellt, und dieses Gemisch zusammen mit einer Harnstoff-Formaldehyd-Harz-Vorkondensat-Lösung auf übliche Weise verschäumt.

ACTORUM AG

Unsere Nr. 24 046                  Pr/br

Schaum-Chemie W.Bauer GmbH & CoKG
4300 Essen 1

Verfahren zur Herstellung eines formaldehydarmen
Harnstoff-Formaldehyd-Kombinations-Schaumes

Die Erfindung betrifft ein Verfahren zur Herstellung eines formaldehydarmen Harnstoff-Formaldehyd-Kombinations-Schaumes durch Verschäumen einer Lösung eines Harnstoff-Formaldehyd-Harz-Vorkondensates mit einer Härter-Schaummittellösung.

Es ist bekannt, schaumartige Massen, für die verschiedensten Anwendungsgebiete durch Verschäumen wäßriger Lösungen härtbarer Harnstoff-Formaldehyd-Harz-Vorkondensate

- 2 -

kontinuierlich herzustellen, indem man die wäßrige Lösung eines Schaummittels, das einen Härter enthält, mittels Druckluft verschäumt und diesen Schaum mit dem ebenfalls mittels Druckluft zugeführten Harnstoff-Formaldehyd-Vorkondensat in einer Mischkammer mischt und diesen Schaum an jedem beliebigen Ort seiner Verwendung zuführt.

Unter Kombinationsschaum versteht man die Zugabe von mindestens 10 % Festanteilen im Schaummittel, z.B. ein Schaum, der aus einem 40%igen Harzvorkondensat und einem Schaummittel mit einem Gehalt von mindestens 10 % Feststoff verschäumt worden ist.

Bei der sogenannten "Harzaufschäumung" (H. Baumann, "Schaumstoff Isoschaum im Schmelztiegel der Praxis", Heizung-Lüftung-Haustechnik 18 (1967) 17) werden Harz- und Tensidpulver in Wasser gelöst und der Härter in der Apparatur getrennt zugeführt.

Die Anwendungsgebiete sind in der Literatur beschrieben (H. Baumann "Weitere Entwicklungen auf dem Gebiet der Harnstoff-Formaldehydharz-Schäume" Kunststoff 47 (1957) 256-259. Engl. Kunststoffe German Plastics Vol. 48, August (1958); derslb. "Herstellung und Verarbeitung von UH-Schaumkunststoffen - Neue wissenschaftliche und technische Erkenntnisse", Plastverarbeiter (1976),
Heft 5. ; derslb., "Fortschritte bei UF-Schaumkunststoffen - Neue Polykondensate und Schaumkunststoffe",
Kunststoffe 69 (1979) Heft 8, Engl. Kunststoffe German
Plastics 11/81; C.J. Benning, "Plastic Foams",
Wiley and Sons, New York, (1969); K.C.Frisch and
J.H. Sounders, "Plastic Foams", Marcel Dekker Inc.,
New York, (1973); B.Meyer "Urea-Formaldehyde Resins",
Addision-Wesley Publishing Comp., Massachusetts (1979)).

Die Ausdrücke "Harnstoff-Formaldehyd" und "UF" werden im
nachfolgenden identisch angewendet.

Die UF-Schaumkunststoffe haben gegenüber anderen Dämmmaterialien viele Vorteile, sie werden z.B. aus wäßrigen
Lösungen hergestellt und sind erdölunabhängig, tragen bei
einem Brand nicht zur Ausbreitung des Feuers bei und liegen
in einem günstigen, niederen Preisbereich. 40 l Grundlösung,
z.B. 20 l Harzlösung und 20 l Schaummittellösung geben
1000 l Fertigschaum. Es entfällt die aufwendige Lagerhaltung wie bei Plattenware wie auch hohe Versicherungskosten.Sie gehören zu den Dämmaterialien, welche die volkswirtschaftlichen Forderungen erfüllen.

Die UF-Schaumkunststoffe geben beim Austrocknen, das bei
den handelsüblichen Schäumen bis zu 28 Tagen dauern kann,
abhängig von der Umgebungstemperatur und von der Luftfeuchtigkeit, geringe Mengen Formaldehyd, der im Wasser
gelöst ist, und von kurzkettigen methylolhaltigen Gruppen,
die sich zu Formaldehyd umsetzen können, an die Luft ab.
Dies führt zu Geruchsbelästigungen.

-4-

In den USA wird von der CPSC (Consumer Product Safety Commission) aus Schaumstoffen freigesetzter Formaldehyd für gesundheitsbedenklich gehalten.

Schon früh, 1939, schlug man vor, unter Verwendung von Alkoholen den Restformaldehyd im UF-Schaum zu eliminieren. (DRP 729 029). Eine weitere, wenn auch geringe Formaldehydreduzierung wird erreicht durch Zugabe von Alkoholen mit 4 oder mehr Hydroxylgruppen zum Harz (DBP 1 054 232).

Es ist auch seit langem bekannt, den Flüssigharzen rund 15 % Harnstoff zuzusetzen, den Pulverharzen im allgemeinen rund 12 % (Technische Information der BASF, September 1981), ein mehr im Harz führt zum Nachlassen der Druckfestigkeit und zur Abrasionsneigung des UF-Schaumes.

Man versuchte ferner, der zur Herstellung von UF-Schäumen verwendeten Schaummittellösungen, die üblicherweise Salze, insbesondere Na-Salze von Aryl-, Alkyl- oder Alkarylsulfonsäuren als Schaummittel enthalten, größere Mengen Harnstoff zuzusetzen, jedoch trat dabei Trübung bzw. Ausfällung des Harnstoffs auf und führte zum Nachlassen der Druckfestigkeit und zur Abrasionsneigung des UF-Schaumes.

Gibt man beispielsweise einer Na-sulfonat-Schaummittellösung Harnstoff zu, so lassen sich 7 g/l (0,12 Mol) bei 18°C und 15 g/l (0,25 Mol) bei 25°C einsetzen. Diese geringen Mengen haben aber keinen wesentlichen Einfluß auf die Formaldehydbindung. Fügt man größere Mengen Harnstoff der Na-sulfonat-lösung zu, bilden sich Trübungen, nach 24 Stunden z.B. sogar Niederschläge. Diese wurden chromatographisch einwandfrei als Harnstoff identifiziert. Die Ausfällung bzw. Trübung ist zwar temperaturabhängig und kann teilweise temporär verschwinden und läßt sich in Ammoniak, Amylmethylketon, Dimethylformaldehyd, Dioxan, Essigsäure, Furfurylalkohol, Glycol und Resorcin und andere lösen, wobei jedoch die Schaumfähigkeit des Schaummittels verlorengeht.

Der schwach basische Charkater des Harnstoffs verändert außerdem den pH-Wert der Natrium-Tensid-Lösung und muß später mit Säure wieder eingestellt werden, wobei in Lösung gegangener Harnstoff wieder ausfällt.

Die US-PS 3 231 525 versuchte dieses Problem zu lösen, indem sie anstelle des Na-Salzes einer Sulfonsäure in der Härter-Schaummittellösung die Säure als solche verwendete. Dabei ließen sich zwar wesentlich größere Harnstoffmengen in der Schaummittellösung lösen, die dabei entstehenden Schäume sind jedoch nicht dimensionsstabil, sondern schrumpfen und entsprechen bezüglich der hydrothermischen Belastung nicht dem technischen Standard.

Alle bisherigen Versuche, den Restformaldehyd in Schaumstoffen zu eliminieren waren nicht zufriedenstellend, weil entweder die gewünschte Eliminierung nicht aus-

-6-

reichend war oder aber im Hinblick auf Dimensionsbeständigkeit, Rissebildung oder Flammfestigkeit unbefriedigende Produkte erzielt wurden.

Man versuchte zwar immer wieder, die physikalischen und/
oder chemischen Eigenschaften des fertigen UF-Schaumes
umfassend zu verbessern, wobei in der Literatur z.B.
Stabilisatoren, Reaktionsbeschleuniger, Zusatz-
Zuschlag-Stoffe, Zusatzmittel, additive Füllstoffe,
Plastifizierungsmittel usw. beschrieben werden.
Diese Versuche blieben jedoch ohne wesentliche Bedeutung.

Aufgabe der Erfindung war es, größere Mengen Harnstoff
in das Schaummittel einzubringen, um einen UF-Schaum mit
geringer Formaldehydabgabe und schnellerer Austrocknungszeit zu erzielen, der jedoch dimensionsstabil, frei von
Rissen und druck-, abrasions- und flammfest ist, d.h.
in seinen Gesamteigenschaften dem technischen Standard
entspricht.

Diese Aufgabe wird erfindungsgemäß dadurch gelöst,
daß man bis zu 96 % Harnstoff in
einem etwa 10 bis 30%igen wäßrigen Extrakt einer
Alkyl-, Aryl- oder Alkarylsulfonsäure löst,
diese Lösung mit einer üblichen Härter-Schaummittellösung, die das Na-Salz einer Alkyl-, Aryl-
oder Alkarylsulfonsäure in einer zum Verschäumen
üblichen wäßrigen Verdünnung enthält, im Verhältnis Sulfonsäurelösung zu Na-Sulfonatlösung von
1:1 bis 1:4 vermischt, den pH-Wert auf 0 bis 3
einstellt und dieses Gemisch zusammen mit einer
Harnstoff-Formaldehyd-Harz-Vorkondensat-Lösung auf
übliche Weise verschäumt.

-7-

Überraschenderweise wurde gefunden, daß der in größeren Mengen in einem Sulfonsäureextrakt gelöste Harnstoff bei Zugabe einer verdünnten Na-Sulfonatschaummittellöstung nicht wieder ausfällt.

Es lassen sich somit einerseits größere Mengen Harnstoff, die ausreichen, um Restformaldehyd weitestgehend zu eliminieren, im Sulfonsäureextrakt lösen und andererseits läßt sich der ungenügend schaumfähigen Harnstoff-Sulfonsäurelösung eine zur Erzielung einer guten Schaumfähigkeit ausreichende Menge Na-sulfonat-Schaummittellösung zusetzen, ohne daß der gelöste Harnstoff wieder ausfällt.

Die zur UF-Schaumherstellung geeigneten anionenaktiven Schaummittel, auch als Tenside, Substanzen mit grenzflächenaktiven Eigenschaften, "grenzflächenaktive" Stoffe, "Surfactance" oder "Detergentien" bezeichnet, vorwiegend auf der Grundlage von Aryl- und Alkylsulfonsäuresalzen, sind ausführlich beschrieben u.a. von K. Lindner, "Tenside", drei Bände, Wissenschaftliche Verlagsanstalt mbH, Stuttgart (1964); Band 3 erschien 1971; G. Jawalek "Tenside", Akademie Verlag, Berlin (1975); H. Stache "Tensid-Taschenbuch", Hanser-Verlag, München (1979); und in den Druckschriften und Merkblättern der Hersteller.
Die Isopropylnaphthalinsulfonate sind bessere Netzmittel als die monopropylierten. Eine Verstärkung erreicht man durch die Einführung von meist zwei Butylresten in den Naphthalinkern, auch zieht man z.B. den Isobutylrest dem N-Butylrest vor. Die Verzweigung im Kohlenwasserstoffskelett wirkt sich netztechnisch günstig aus und verstärkt den sperrigen Bau der Moleküle.

-8-

Als Schaummittel bevorzugt wird beispielsweise Diisobutylnaphthalinsulfonsaures Natrium.

Eine spritzfertige Schaummittellösung besteht beispielsweise aus 20 % Diisobutylnaphthalinsulfonsaurem Natrium, 4 % Resorcin, 25 % 85%iger $H_3PO_4$ und 51 % ent-härtetem Wasser. 45 ml dieses Extraktes gibt man zu 956 ml Wasser und erhält so die zur Verschäumung verwendete Lösung.

Harnstoff-Formaldehyd-Vorkondensate (Aminoplaste) sind vielfach in der Literatur beschrieben (Beat Meyer "Urea Formaldehyde Resins" (1979), Addison-Wesley Publishing Company, Inc.). Zur UF-Schaumherstellung sind aber nur solche Harze geeignet, die hierfür eigens formuliert sind. Leimharze z.B. führen zu nichtwasserfesten Schäumen und können im Fertigschaum zu Pilzbildung führen.

Erfindungsgemäß besonders geeignet ist beispielsweise ein 40%iges wäßriges Harnstoff-Formaldehyd-Harz-Vorkondensat, das aus Harnstoff und Formaldehyd im Mol-Verhältnis 1:1,2 in bekannter Weise bei 100°C hergestellt worden, mit NaOH auf einen pH-Wert um etwa 7,0 neutralisiert und auf Raumtemperatur abgekühlt worden ist.

-9-

Als erfindungsgemäß verwendete Alkyl-, Aryl- und Alkarylsulfonsäuren eignen sich im Prinzip alle diejenigen Säuren, deren Na-Salze als Schaummittel in der Literatur beschrieben werden. Als besonders geeignet erwiesen sich jedoch die Diisobutylnaphthalinsulfonsäure und die Dodecylbenzolsulfonsäure und deren Gemisch. Es eignen sich jedoch auch alle anderen Alkyl-, Aryl- und Alkarylsulfonsäuren allein oder im Gemisch.

Als Harnstoff sind alle Alkyl- und Arylharnstoffe zu verwenden, z.B. Monoalkyl-Monoaryl-Harnstoffe, Dialkyl-Diaryl-Harnstoffe, Trialkyl-Triarylharnstoffe, Tetraalkylharnstoffe und die Derivate des Isoharnstoffs.

Anstelle von Harnstoff kann man auch Thioharnstoff verwenden, der allerdings in der Literatur als cancerogen beschrieben ist, von dem alle Kondensations-Reaktionen des Harnstoffs bekannt sind, er besitzt den Vorteil, sich in größeren Mengen auch bei Zugabe relativ großer Mengen der Natriumsulfonatschaummittellösung ohne Trübung auf-lösen zu lassen. Ihn kann man auch mit Harnstoff kombinieren.

Der pH-Wert der zu verschäumenden Lösung liegt zwischen 0 und 3. Besonders günstige Ergebnisse erzielt man bei einem pH-Wert von 1,3 bei 10°C.

Zur Einstellung des pH-Wertes der zu verschäumenden Lösung kann jede geeignete Säure oder saures Salz verwendet werden. Bevorzugt werden $H_3PO_4$ und $H_2SO_4$. Aus ökonomischen Gründen wird $H_2SO_4$ besonders bevorzugt, weil z.B. bei Verwendung von 85%iger $H_2SO_4$ die erforderliche Menge nur 1/5 von derjenigen beträgt, die bei 85%iger $H_3PO_3$ erforderlich wäre.

Bekannt ist die wechselnde Aushärtung des UF-Schaumes bei höheren oder niedrigen Außentemperaturen durch eine sorgfältige Beobachtung der Abbindezeiten des Fertigschaumes. Diese sind vom pH-Wert abhängig.

Die exakten Messungen der unterschiedlichen pH-Werte des zur Verschäumung verwendeten Tensids in Verbindung mit der Temperatur sind aus Tabelle I zu entnehmen. Aufgrund der gefundenen Werte erscheint es zweckmäßig, alle Formulierungen bei gleicher Harz- und Schaumtemperatur vorzunehmen, da die pH-Wert-Streuungen beim Tensid größer sind als beim Harz (s. Tabelle).

## TABELLE I

pH-Werte der Extrakte und Schaumlösungen in Abhängigkeit von der Temperatur

| Mischungsverhältnis Extrakt/ Wasser/ ml | | | Na-Tensid-Extrakt/l | | | Säure-Tensid-Extrakt + 850 g Harnstoff/l | | |
|---|---|---|---|---|---|---|---|---|
| | | | 10°C | 20°C | 30°C | 10°C | 20°C | 30°C |
| 900 | : | 100 | 0,20 | -0,01 | -0,18 | 2,15 | 2,23 | 2,18 |
| 800 | : | 200 | 0,29 | 0,14 | -0,03 | 2,07 | 2,17 | 2,10 |
| 700 | : | 300 | 0,42 | 0,27 | 0,07 | 1,98 | 2,09 | 2,01 |
| 600 | : | 400 | 0,60 | 0,34 | 0,25 | 1,85 | 1,99 | 2,00 |
| 500 | : | 500 | 0,64 | 0,49 | 0,32 | 1,75 | 1,91 | 1,80 |
| 400 | : | 600 | 0,70 | 0,62 | 0,45 | 1,68 | 1,83 | 1,76 |
| 300 | : | 700 | 0,79 | 0,73 | 0,55 | 1,60 | 1,77 | 1,75 |
| 200 | : | 800 | 0,85 | 0,83 | 0,56 | 1,94 | 1,68 | 1,74 |
| 100 | : | 900 | 1,14 | 0,93 | 0,67 | 1,95 | 1,57 | 1,73 |

Tabelle I (Fortsetzung)

| Extrakt/ Wasser ml | | | Na-Tensidlösung/l | | | Säure-Tensid-Lösung + 850g Harnstoff/l | | |
|---|---|---|---|---|---|---|---|---|
| | | | 10°C | 20°C | 30°C | 10°C | 20°C | 30°C |
| 30 | : | 970 | 1,23 | 1,21 | 1,09 | 1,49 | 1,75 | 1;70 |
| 40 | : | 960 | 1,11 | 1,10 | 1,00 | 1,47 | 1,72 | 1,60 |
| 50 | : | 950 | 1,08 | 1,05 | 0,92 | 1,44 | 1,66 | 1,53 |
| 60 | : | 940 | 0,99 | 0,92 | 0,90 | 1,43 | 1,60 | 1,51 |

$pH$ - Werte eines handelsüblichen Harzes

| 10°C | 15°C | 20°C | 30°C |
|---|---|---|---|
| 7,60 | 7,57 | 7,55 | 7,50 |

-12-

Die Erfindung läßt sich sowohl bei der sogenannten "Schaumaufschäumung" als auch bei der "Harzaufschäumung" anwenden oder bei bekannten Apparaturen, denen man die Komponenten einzeln zuführt und dann aufschäumt (vgl. H.Baumann, "Schaumstoff Isoschaum im Schmelztiegel der Praxis", Heizung-Lüftung-Haustechnik 18·(1967), S. 17-19 sowie a.a.O. Urea-Formaldehyde Resins, S. 192).

Erfindungsgemäß lassen sich bis zu 96 % Harnstoff im Sulfonsäureextrakt lösen.

Die Menge des zuzugebenden Harnstoffs richtet sich nach dem reaktionsfähigen Formaldehyd oder des Formaldehyds aus reaktionsfähigen Methylolverbindungen, die aus jedem handelsüblichen Harz berechnet werden können oder empirisch zu ermitteln sind.

Sollte eine verschäumbare Tensidlösung, die man z.B. bei niedrigen Temperaturen hergestellt hat, zu einer unerwünschten Trübung führen, verschwindet diese beim Erwärmen. Ist dies nicht möglich, wird sie durch äquivalente Mengen von Resorcin stabil gelöst.

Durch Zusatz von Polyethylen-, oder Polyethylenglycolen, z.B. Diethylenglycol, zum UF-Harz werden zwar fast gänzlich schrumpffreie Schäume erhalten, jedoch leidet darunter die Flammfestigkeit. Bei der hydrothermischen Behandlung einer Schaumprobe konnte festgestellt werden, daß Diethylenglykol mit den Kohlenstoffverbindungen fest verknüpfte Reaktionsprodukte bildet.

Es wurde überraschenderweise gefunden,daß bei Zugabe von Polyethylenglykolen zur weiteren Schrumpfstabilisierung des Schaumstoffs bei den erfindungsgemäß hergestellten Schaumstoffen die Flammfestigkeit praktisch nicht darunter leidet im Gegensatz zu den bisher üblichen nur mit Sulfonaten verschäumten Schaumstoffen.

Nachstehende Beispiele dienen der weiteren Erläuterung der Erfindung.

Beispiel 1

In 1 l eines 20%igen wäßrigen Dodecylbenzolsulfonsäureextraktes wurden 960 g (16 Mol) Harnstoff gelöst. Man stellte ferner eine Schaummittellösung dadurch her, daß man 45 ml eines Extraktes aus 20 % Diisobutylnaphthalinsulfonsäurem Natrium, 4 % Resorcin, 25 % 85%iger $H_3PO_4$ und 51 % enthärtetem Wasser mit Wasser auf 1 l verdünnte. Man vermischte 200 ml des Sulfonsäure-Harnstoffextraktes mit 800 ml der Na-sulfonatlösung. Es fiel kein Harnstoff aus. Dies bedeutet, daß 192 g = 19,2 % bzw. 3,2 Mol Harnstoff von 1 l Schaummittellösung aufgenommen wurde, dies ist die 12,8fache molare Menge von derjenigen, die eine Na-Sulfonat-Schaummittellösung bei 25°C aufnimmt.

Beispiel 2

Man verfuhr nach Beispiel 1, verwendete jedoch 300 ml des Sulfonsäureharnstoffextraktes und 700 ml der Na-sulfonatlösung, wobei kein Harnstoff ausfiel. Dies bedeutet, daß 288 g Harnstoff = 28,8 % bzw. 4,8 Mol Harnstoff von 1 l Schaummittellösung aufgenommen wurden.

Beispiel 3

Man verfuhr nach Beispiel 1, jedoch mit dem Unterschied, daß als Sulfonsäure Diisobutylnaphthalinsulfonsäure verwendet wurde. Das Ergebnis war analog demjenigen im Beispiel 1.

Beispiel 4

Man verfuhr nach Beispiel 2, jedoch mit dem Unterschied, daß als Sulfonsäure Diisobutylnaphthalinsulfonsäure verwendet wurde. Das Ergebnis war analog demjenigen von Beispiel 2.

Beispiel 5

Man versetzte eine handelsübliche 40%ige wäßrige Harnstoff-Formaldehyd-Harz-Vorkondensat-Lösung, die dadurch hergestellt worden war, daß man Harnstoff und Formaldehyd im Mol-Verhältnis 1:1,2 auf bekannte Weise bei 100°C umsetzte, mit NaOH auf einen pH-Wert von 7,0 einstellte und auf Raumtemperatur abkühlte, mit 80 ml Sorbitol und 80 ml Diethylenglycol und verschäumte sie mit dem gemäß Beispiel 1 hergestellten Schaummittel-Harnstoffgemisch im Verhältnis Schaummittel zu Harz von 1,7:2. Der mit einem Dräger-Röhrchen 0,5 gemessene Restformaldehyd betrug nach 11 Tagen 0,5 ppm; Fp = 199 - 210°C. Unterzieht man einen Schaumwürfel von 5 x 5 x 5 cm bei 80°C und fast 100%iger relativer Feuchtigkeit über drei Stunden einer hydrothermischen Behandlung, so gibt der Volumen- und Gewichtsverlust des Reaktanten Auskunft über die Stabilität des Fertigschaumes. Eine Verlängerung der Behandlung bringt keine anderen Werte, auch tritt nach drei Stunden keine weitere Formaldehydabspaltung auf. Die Volumen- und Gewichtsverluste bei unterschiedlichen Formulierungen sind der Tabelle II zu entnehmen.

## Vergleichsbeispiel 6

Man verfuhr nach Beispiel 5 mit dem Unterschied, daß man die Harz-Vorkondensat-Lösung nur mit 80 ml Sorbitol versetzte und daß man als Schaummittel nur die Na-sulfonatlösung verwendete. Der Restformaldehyd betrug nach 11 Tagen 1,5 pp, Fp: 217 bis 218°C. Die Eigenschaften des Schaumes nach hydrothermischer Behandlung sind in Tabelle II angegeben.

0093919

TABELLE II

Hydrothermische Behandlung 80°C/100 %ige Luftfeuchtig-keit *

| Tage nach der Schaum-erzeugung | Abnahme von Volumen und Gewicht in % | | | |
|---|---|---|---|---|
| | Vergleichsbei-spiel 6 | | Beispiel 5 | |
| | Volumen | Gewicht | Volumen | Gewicht |
| 2 | 17,00 | 9,52 | 13,36 | 6,63 |
| 3 | 16,70 | 8,00 | 13,37 | 6,58 |
| 4 | 15,80 | 10,50 | 13,90 | 5,59 |
| 7 | 14,70 | 12,60 | 13,73 | 6,60 |
| 8 | 13,50 | 9,00 | 13,20 | 2,30 |
| 9 | 12,29 | 8,40 | 13,40 | 2,50 |
| 10 | 11,50 | 8,60 | 11,50 | 2,00 |
| 11 | 13,40 | 8,00 | 7,90 | 1,90 |

* Anschließend sofort bei 105°C 30 Minuten getrocknet und Gewicht nach 30 Min. Lagerung bei Raumtemperatur bestimmt. (23°C und 44 % rel. Luftfeuchtigkeit).

Vergleichsversuch 7

Man verfuhr nach Beispiel 5 unter Verwendung eines Schaummittel-Harnstoffgemischs, das sich von demjenigen des Beispiels 1 dadurch unterschied, daß man anstelle des Diisobutylnaphthalinsulfonsauren Natriums Diisobutylnaphthalinsulfonsäure verwendete. Das daraus entstehende Vorkondensat-Schaummittelgemisch ließ sich überhaupt nicht als Schaum verspritzen.

Wie aus den Beispielen 5, 6 und 7 und den Werten der Tabelle II ersichtlich ist, lassen sich erfindungsgemäß ausgezeichnete, dimensionsstabile Schäume mit einer ganz geringen Restformaldehydmenge herstellen, während bei alleiniger Verwendung eines Na-Sulfonats als Schaummittel Produkte mit wesentlich höherem Restformaldehydgehalt erzielt werden, deren Eigenschaften nach hydrothermischer Behandlung darüberhinaus schlechter sind als bei den erfindungsgemäßen Produkten.

Bei alleiniger Verwendung von Sulfonsäure als Schaummittel gemäß US-PS 3 231 525 lassen sich überhaupt keine Schäume verspritzen.

Zum Nachweis darüber, daß die Flammfestigkeit der erfindungsgemäß hergestellten Produkte bei Zugabe von Polyethylenglykol nicht beeinträchtigt wird im Gegensatz zu herkömmlichen Produkten wurde der sogenannte Kanten-beflammungstest durchgeführt.

0093919

Diese Kantenbeflammung wurde bei dem erfindungsgemäß
nach Beispiel 5 hergestellten Schaum, lediglich unter
Verwendung von 120 ml Diethylenglykol und im Vergleich
mit dem gemäß Beispiel 6 hergestellten Schaum, jedoch
unter Zugabe von 120 ml Diethylenglykol durchgeführt.

Die Ergebnisse zeigten, daß das Produkt des Beispiels 5
praktisch flammfest war, während die Flammfestigkeit
des Produktes von Vergleichsbeispiel 6 stark beeinträchtigt war.

— 20 —

P a t e n t a n s p r ü c h e

1. Verfahren zur Herstellung eines formaldehydarmen Harnstoff-Formaldehyd-Kombinations-Schaumes durch Verschäumen einer Lösung eines Harnstoff-Formaldehyd-Harz-Vorkondensates mit einer Härter-Schaummittellösung, d a d u r c h   g e k e n n - z e i c h n e t, daß man bis zu 96 % Harnstoff in einem etwa 10 bis 30%igen wäßrigen Extrakt einer Alkyl-, Aryl- oder Alkarylsulfonsäure löst, diese Lösung mit einer üblichen Härter-Schaummittellösung, die das Na-Salz einer Alkyl-, Aryl- oder Alkarylsulfonsäure in einer zum Verschäumen üblichen wäßrigen Verdünnung enthält, im Verhältnis Sulfonsäurelösung zu Na-Sulfonatlösung von 1:1 bis 1:4 vermischt, den pH-Wert auf 0 bis 3 einstellt und dieses Gemisch zusammen mit einer Harnstoff-Formaldehyd-Harz-Vorkondensat-Lösung auf übliche Weise verschäumt.

2. Verfahren nach Anspruch 1, dadurch gekennzeichnet, daß man als Sulfonsäure Diisobutylnaphthalinsulfonsäure oder Dodecylbenzolsulfonsäure verwendet.

3. Verfahren nach einem der vorstehenden Ansprüche, dadurch gekennzeichnet, daß man den pH-Wert bei 10°C auf 1,3 einstellt.

4. Verfahren nach einem der vorstehenden Ansprüche, dadurch gekennzeichnet, daß man zum Einstellen des pH-Wertes $H_2SO_4$ oder $H_3PO_4$ verwendet.

5. Verfahren nach einem der vorstehenden Ansprüche, dadurch gekennzeichnet, daß man der Harzlösung vor dem Verschäumen einen Alkohol mit 4 oder mehr Hydroxylgruppen und Polyethylenglycol zusetzt.

6. Verfahren nach einem der vorstehenden Ansprüche, dadurch gekennzeichnet, daß man 750 ml des Harnstoff-Formaldehyd-Harz — Vorkondensats, dem 110 ml eines Alkohols mit 4 oder mehr Hydroxylgruppen und 140 ml eines Polyethylenglycols zugesetzt worden waren, mit einem Gemisch aus 800 ml einer 1,1%igen wäßrigen Lösung des Na-sulfonats und 200 ml einer 20%igen Lösung der Sulfonsäure, die 900 g Harnstoff enthält, verschäumt.

| | **EINSCHLÄGIGE DOKUMENTE** | | EP 83103950.8 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. ³)** |
| A | <u>DE - A1 - 2 917 064</u> (BASF AG) <br> * Seite 5a,b * <br> -- | 1,2,4 | C 08 J 9/30 <br> C 08 L 61/24 |
| A | <u>DE - A1 -2 542 471</u> (BASF AG) <br> * Beispiel 1; Seite 4, Zeilen 1-4 von unten; Seite 3, Zeile 7 von unten * <br> -- | 1,4,5 | |
| D,A | <u>US - A - 3 231 525</u> (KELLY and WELLS) <br> * Ansprüche * <br> ---- | 1 | |
| | | | **RECHERCHIERTE SACHGEBIETE (Int. Cl. ³)** <br><br> C 08 J 9/00 <br> C 08 L 61/00 |

Der vorliegende Recherchenbericht wurde für alle Patentansprüche erstellt.

| Recherchenort | Abschlußdatum der Recherche | Prüfer |
|---|---|---|
| WIEN | 11-08-1983 | WEIGERSTORFER |